# EUROPEAN PATENT APPLICATION

(11) **EP 1 785 388 A1**
(43) Date of publication of application: **16.05.2007**
(21) Application number: 06023609.8
(22) Date of filing: 14.11.2006
(51) Int. Cl.: B66C 19/00

(54) **Improved straddle carrier**

(30) Priority: 15.11.2005 BE 200500551
(71) Applicant: COMBINUS, b.v.m.b.a., 2160 Wommelgem (BE)
(72) Inventor: Callens, Ludo Willy Florentina, 2160 Wommelgem (BE)
(74) Representative: Donné, Eddy

(57) **Abstract**

Improved straddle carrier which mainly consists of a chassis with a mobile and controllable tire carrier (3) formed of two mainly parallel longitudinal girders (4) on wheels and a frame (6) which can be adjusted in height provided on it, which is equipped with means (7) for picking up a load (8, 43), characterized in that the straddle carrier (1) can be adjusted or folded up widthwise, and is dimensioned such that it can be easily transported and preferably fits in a container (42) when the chassis is drawn in or folded up widthwise and the frame (6) has been lowered.

## Description

The present invention concerns an improved straddle carrier.

As is known, a straddle carrier is designed to be driven over a load so as to be able to lift this load and to move it to another location.

Straddle carriers are typically applied for moving and stacking containers.

Such straddle carriers are already known which mainly consist of a mobile and controllable tire carrier which is formed of two parallel carrier elements on wheels onto which is provided a frame which can be adjusted in height and which is equipped with means for picking up said load.

Such straddle carriers are disadvantageous in that they are relatively large and high and not suitable to be moved or carried over long distances due to their construction and size.

If such straddle carriers do need to be moved, however, they are usually partly dismantled and taken to their destination by means of trucks or the like, where they are then assembled again.

It goes without saying that such movements are restricted to the very minimum and that, as a consequence, such straddle carriers usually stay where they are, in a harbor terminal or the like.

A disadvantage linked thereto is that such straddle carriers, given their relatively high cost and their restricted radius of action, are neither flexible, nor economical in use for smaller companies which need such straddle carriers only sporadically.

That is why such smaller companies generally do not use a straddle carrier, but rather a fork-lift truck or mobile crane, either or not rented, for handling containers.

It is clear that handling such containers with a crane lorry is less safe than using an adapted straddle carrier, as a result of which the risk of damages to the container and its content increases.

Moreover, renting a crane lorry is usually relatively expensive, and they have to be ordered in advance, which requires a very punctual planning.

The present invention aims to remedy one or several of the above-mentioned and other disadvantages.

To this end, the invention concerns an improved straddle carrier which mainly consists of a chassis with a mobile and controllable tire carrier which is formed of two mainly parallel longitudinal girders on wheels and a frame which can be adjusted in height provided on it, equipped with means for picking up a load, whereby the straddle carrier can be adjusted or folded up widthwise and is dimensioned such that it can be easily transported by a truck or wagon, or preferably even fits in a container when the chassis has been retracted or folded up widthwise and the frame has been lowered.

An improved straddle carrier according to the invention is advantageous in that it can be easily moved, preferably in a container, as a result of which it is far more flexible in use and purchasing it also becomes interesting for smaller companies.

Such a straddle carrier according to the invention preferably fits in a standard sea container, in particular a standard forty-feet sea container, such that use can be made of a generally available and widespread type of container for the straddle carrier's transport.

In order to better explain the characteristics of the invention, the following preferred embodiments of a straddle carrier according to the invention are given as an example only without being limitative in any way, with reference to the accompanying drawings, in which:
figure 1 schematically represents an improved straddle carrier according to the invention when operational;
figure 2 represents a view according to arrow F2 in figure 1;
figure 3 represents a view as that in figure 3 while
the straddle carrier is in use;
figure 4 represents the straddle carrier of figure 1, but in another position;
figure 5 represents the straddle carrier of figure 1 in a situation in which it can be carried in a container;
figure 6 represents a variant of an improved straddle carrier according to the invention.

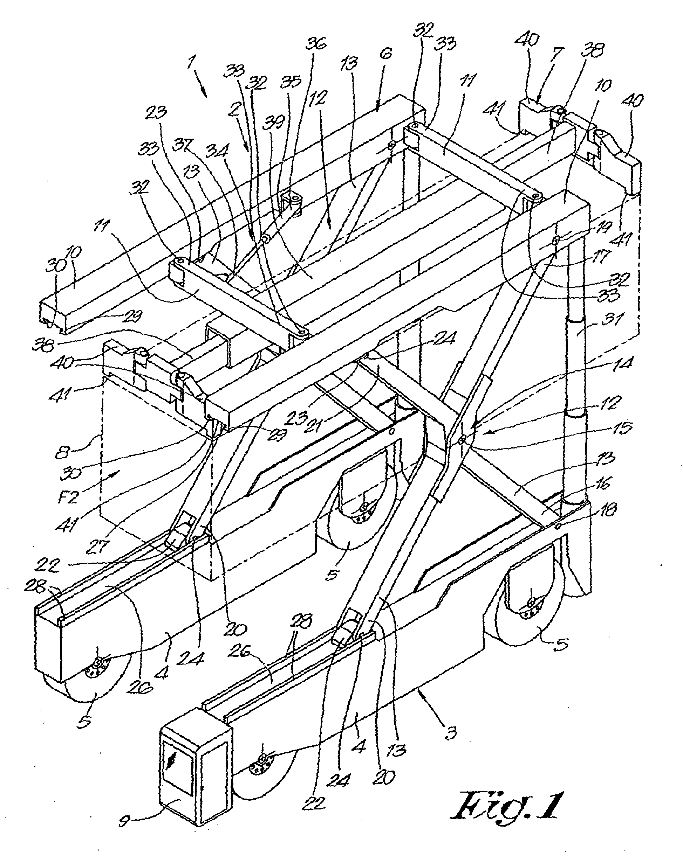

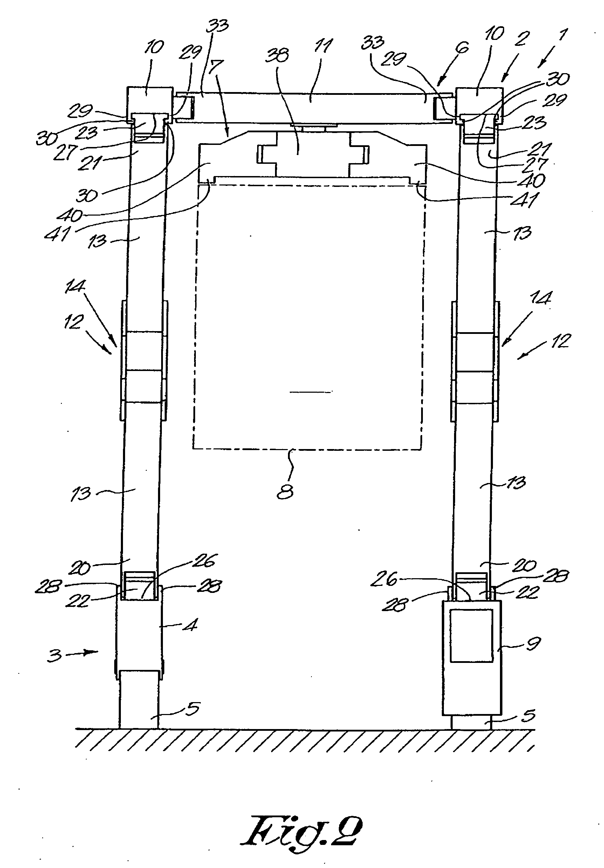

Figures 1 and 2 represent an improved straddle carrier 1 according to the invention which mainly consists of a chassis 2 with a mobile and controllable tire carrier 3 which is mainly formed of two mainly parallel longitudinal girders 4 on wheels 5 and onto which is provided a frame 6 which can be adjusted in height, equipped with means 7 for picking up a load, in this case a container 8 represented as a dashed line, and a control cab 9 from where the movement of the straddle carrier 1 can be controlled and from where the straddle carrier 1 can be operated for picking up and putting down a load.

To this end, the straddle carrier 1 is provided with a source of energy, not represented in the figures, in the form of an engine which drives for example a hydraulic pump for the hydraulic drive and control of the straddle carrier 1 by means of for example hydraulic engines and cylinders.

The frame 6 is formed of two girders 10 which are connected to each other by means of two parallel or practically parallel cross beams 11, and it is supported by means of double shears with two similar, adjustable shear mechanisms 12 which each rest on a longitudinal girder 4 of the tire carrier 3 and each support a girder 10 of the frame 6.

Each shear mechanism 12 has two hinged parts 13 which hinge in relation to each other in a central hinge point 14 by means of a shaft 15.

Each shear mechanism 12 is hinge-mounted to a longitudinal girder 4 of the tire carrier 3 and to a girder 10 of the frame 6 with two of its free ends, 16 and 17 respectively, situated on one side of the hinge point 14, by means of the fixed shafts 18 and 19 respectively.

The two remaining far ends 20 and 21 of each shear mechanism 12 on the other side of the hinge point 14 are provided with a carriage or a trolley, 22 and 23 respectively, which are hinge-mounted to the far ends 20 and 21 concerned by means of shafts 24 and 25, and which are provided in guides 26 and 27, formed of two parallel ribs 28 on the top side of a longitudinal girder 4 and of two parallel ribs 29 with inwardly folded edges 30 on the lower side of a girder 10, such that they can move in the longitudinal direction, shift in particular.

The above-mentioned frame 6 can be adjusted in height by means of one or two hydraulic or pneumatic cylinders which, in the given example, are vertically erected telescopic cylinders with several telescopic parts, whereby these cylinders 31 are provided between the tire carrier 3 and the frame 6, but which can also be provided, according to an alternative embodiment 1, between the tire carrier 3 and a shear mechanism 12 or between a shear mechanism 12 and the frame 6 or between the hinge-mounted parts 13 of a shear mechanism 12.

Preferably, both shifting free ends 20 and 21 of each shear mechanism 12 are situated on one side of the above-mentioned central hinge point 14 of the shear mechanism 12 concerned, whereas the above-mentioned cylinder 31 is situated on the other side of the central hinge point 14.

The straddle carrier 1 can be adjusted or folded up widthwise according to the invention, in other words in a direction crosswise to the driving direction.

In the specific example of the figures, this is realized as the frame 6 is a frame which can be folded widthwise, whereby the cross beams 11 are hinge-mounted to the girders 10 of the frame 6 by means of vertical shafts 32 with their far ends 33.

The straddle carrier 1 is provided with a drive 34 for folding the straddle carrier 1 widthwise in the form of means which make it possible to fold the frame 6 widthwise by moving the two girders 10 crosswise in relation to each other, in particular by means of a hydraulic or pneumatic cylinder 35 which is hinge-mounted to a girder 10 or cross beam 11 with one far end 36 and which is hinge-mounted with its other far end 37 to another girder 10 or cross beam 11.

In the case of figures 1 and 2, the above-mentioned means 7 are formed of a spreader which is fit for handling containers 8 of different lengths and which, as is known, has telescopic parts 38 to this end which are provided in a central tubular part 39 suspended to the cross beams 11, such that they can extend in the longitudinal direction of the straddle carrier 1, whereby the telescopic parts 38 are provided with crosswise directed supporting arms 40 with appropriate suspension points 41 to pick up a container 8.

The means 7 can preferably be adjusted or folded up widthwise as the supporting arms 40 are hinge-mounted to the telescopic parts 38.

The use of a straddle carrier according to the invention is simple and as follows.

Figures 1 and 2 represent the straddle carrier 1 in its operational condition whereby the straddle carrier 1 is maximally unfolded widthwise and the frame 6 is situated in its highest position, whereby a container 8 is suspended to the frame 6 with the means 7.

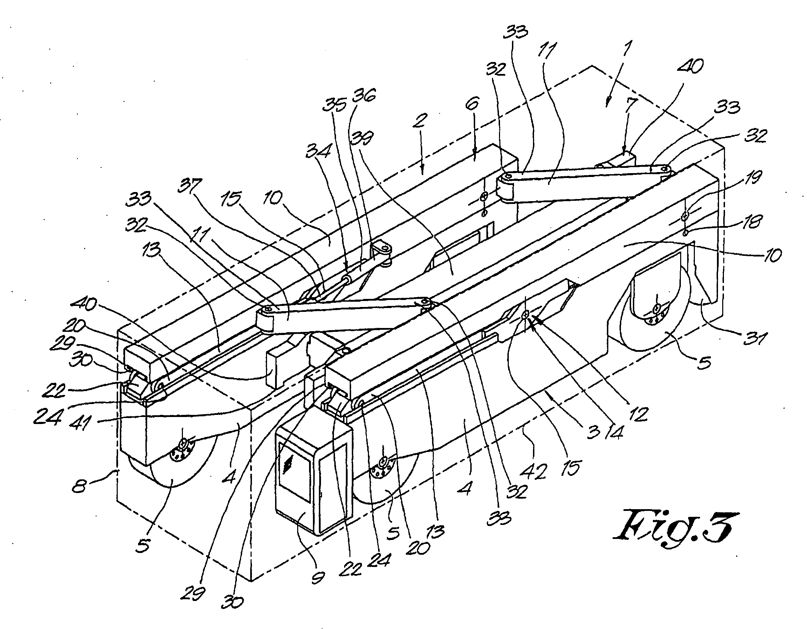

In this situation, the straddle carrier 1 can be moved so as to place the container 8 on a desired location, for example on the ground or, as is the case in figure 3, on another container 8.

To this end, in the case of figure 3, the straddle carrier is driven over the other container 8, and subsequently the telescopic cylinder 31 is gradually drawn in so as to stack the container 8 on the underlying container 8.

After the means 7 have been uncoupled, the straddle carrier 1 can then be driven on to pick up the next container 8 from the ground or from the top of an underlying container and to move it.

While driving, the frame 6 can be lowered, either or not with a container 8 suspended to it, so as to maximally lower the centre of gravity of the straddle carrier 1 and thus improve the stability when taking a bend, which is advantageous in comparison with the conventional straddle carriers whose frame 6 cannot be adjusted in height.

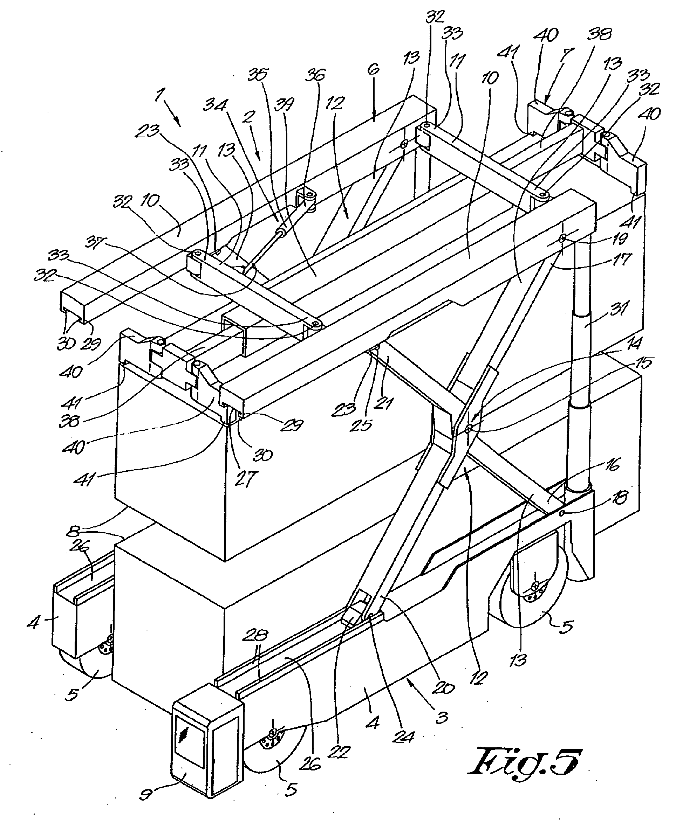

According to the invention, the straddle carrier 1 is dimensioned such that, as is represented in figure 5, it fits in a container represented by means of a dashed line, in particular a standard forty-feet sea container 42, when the straddle carrier 1 is folded up widthwise and the frame 6 has been lowered into its lowest position.

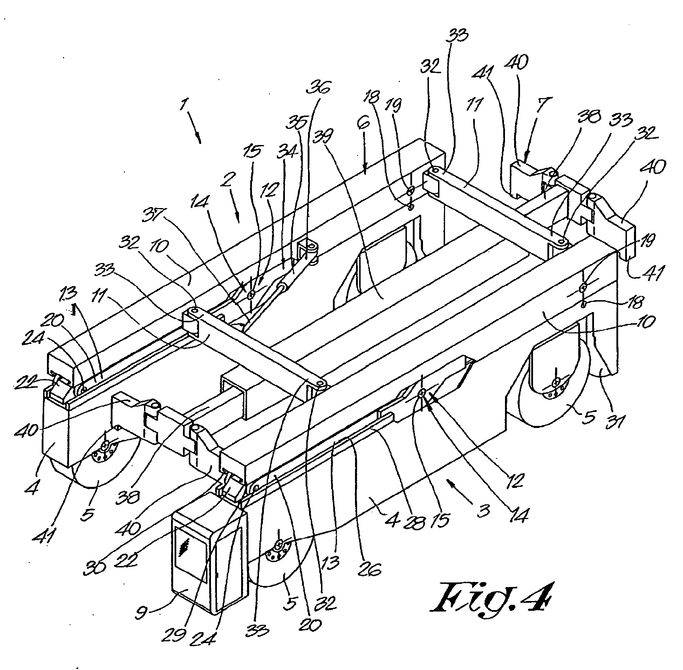

To this end, the telescopic cylinder 31 is entirely drawn in first until the frame 6 is in its lowest position, as is represented in figure 4.

Next, the supporting arms 40 are turned towards each other in the extension of the telescopic parts 38, after which the cylinder 35 is drawn in, as a result of which the cross beams 11 will hinge in relation to the girders 10, such that the girders 10 are drawn towards each other in a straddling manner so as to make the straddle carrier 1 narrower, such that the straddle carrier 1 can be driven in a forty-feet sea container so as to be moved to another, either not overseas location, without any additional dismantling or other actions being required, as is the case with the known straddle carriers.

It is clear that the height adjustment of the frame 6 and folding or drawing in the straddle carrier 1 widthwise can also be realized with other means than those represented in the figures.

Thus, one must not necessarily use a hydraulic drive, for example; also numerous other mechanical, pneumatic or electric actuators can be used.

Moreover, it is also possible to adjust the frame 6 in height in another way than by means of a shear mechanism.

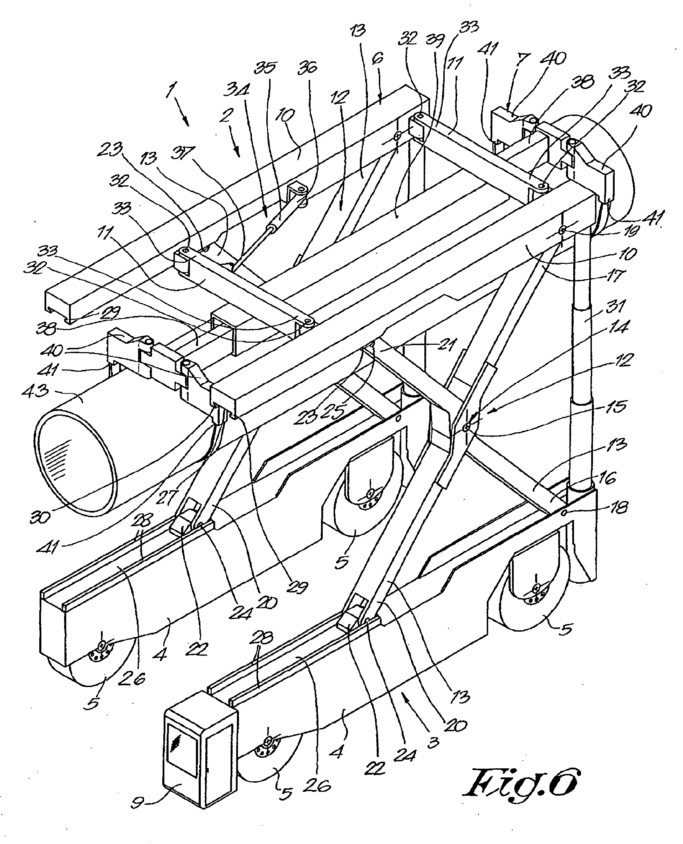

Figure 6 represents a variant of a straddle carrier according to the invention whose means 7 are fit for handling for example pipes 43 or tree-stumps or other loads.

It is also clear that the straddle carrier 1 can be controlled and operated in a teleguided manner.

The present invention is by no means restricted to the embodiments given as an example and represented in the accompanying drawings; on the contrary, such a straddle carrier according to the invention can be made in all sorts of shapes and dimensions while still remaining within the scope of the invention.

## Claims

1. Improved straddle carrier which mainly consists of a chassis with a mobile and controllable tire carrier (3) formed of two mainly parallel longitudinal girders (4) on wheels and a frame (6) which can be adjusted in height provided on it, which is equipped with means (7) for picking up a load (8, 43), **characterized in that** the straddle carrier (1) can be adjusted or folded up widthwise, and is dimensioned such that it can be easily transported and preferably fits in a container (42) when the chassis is drawn in or folded up widthwise and the frame (6) has been lowered.

2. Improved straddle carrier according to claim 1, **characterized in that** it fits in a standard forty-feet sea container (42).

3. Improved straddle carrier according to claim 1 or 2, **characterized in that** the frame (6) consists of two parallel girders (10) which are each provided on an above-mentioned longitudinal girder (4) of the tire carrier (3) such that they can be adjusted in height, and which are connected to each other by means of two parallel or almost parallel cross beams (11) which are hinge-mounted to said girders (10) with their far ends.

4. Improved straddle carrier according to claim 3, **characterized in that** it is provided with a drive (34) for folding up the straddle carrier (1) in the form of means which make it possible to move the two girders (10) crosswise in relation to each other.

5. Improved straddle carrier according to claim 4, **characterized in that** the above-mentioned drive (34) is formed of a hydraulic or pneumatic cylinder (35) which is hinge-mounted to a girder (10) or cross beam (11) with one far end (36) and which is hinge-mounted to another girder (10) or cross beam (11) with its other far end (37).

6. Improved straddle carrier according to any one of claims 3 to 5, **characterized in that** each girder (10) is provided on a longitudinal girder (4) of the tire carrier (3) by means of an adjustable shear mechanism (12) with at least two hinged parts (13) which are hinge-mounted in relation to each other in a central hinge point (14).

7. Improved straddle carrier according to claim 6, **characterized in that** each shear mechanism (12) rests with two of its lower free ends (16, 20) on a longitudinal girder (4) concerned, whereby one far end (16) of the shear mechanism (12) is hinge-mounted to the longitudinal girder (4) and the other far end (20) is provided such on the longitudinal girder (4) that it can shift in the longitudinal direction.

8. Improved straddle carrier according to claim 6 or 7, **characterized in that** the frame (6) rests on both shear mechanisms (12) and **in that** one top end (17) of each shear mechanism (12) is hinge-mounted to a girder (10) of the frame (6), whereas the other top end (21) can be shifted in a guide (26) of the girder (10) concerned extending in the longitudinal direction.

9. Improved straddle carrier according to any one of the preceding claims, **characterized in that** the frame (6) can be adjusted in height by means of a hydraulic or pneumatic cylinder (31).

10. Improved straddle carrier according to claim 9, **characterized in that** the above-mentioned cylinder (31) is a telescopic cylinder provided between the tire carrier (3) and the frame (6).

11. Improved straddle carrier according to claims 7, 8 and 9, **characterized in that** both shifting free ends (20, 21) of each shear mechanism (12) are situated on one side of the above-mentioned central hinge point (14) of the shear mechanism (12) concerned, whereas the above-mentioned cylinder (31) is situated on the other side of the central hinge point (14).

12. Improved straddle carrier according to any one of the preceding claims, **characterized in that** the above-mentioned means (7) for picking up the load concerned are fit for handling a container (8).

13. Improved straddle carrier according to any one of the preceding claims, **characterized in that** the above-mentioned means (7) for picking up the load concerned can be adjusted or folded up widthwise.

14. Improved straddle carrier according to any one of the preceding claims, **characterized in that** the above-mentioned means (7) for picking up the load are suspended to one or both of the above-mentioned cross beams (11) of the frame (6).

15. Improved straddle carrier according to any one of the preceding claims, **characterized in that** it is provided with a control.

16. Improved straddle carrier according to any one of the preceding claims, **characterized in that** it is provided with a control cab (9).

17. Improved straddle carrier according to any one of the preceding claims, **characterized in that** it can be teleguided by means of a remote control.
